# EUROPEAN PATENT APPLICATION

(11) **EP 2 679 445 A2**
(43) Date of publication of application: **01.01.2014**
(21) Application number: 13172497.3
(22) Date of filing: 18.06.2013
(51) Int. Cl.: B60Q 1/26, B60R 13/00

(54) **Vehicle rear closure assembly**

(30) Priority: 26.06.2012 GB 201211284
(71) Applicant: Nissan Motor Manufacturing (UK) Ltd., Cranfield Bedfordshire MK43 0DB (GB)
(72) Inventor: Champaneri, Bhavesh, Cranfield, Bedfordshire MK430DB (GB); Clayton, Bill, Cranfield, Bedfordshire MK430DB (GB)

(57) **Abstract**

A vehicle tailgate comprises lamp assemblies (8a, 8b) comprising housings (16) having walls forming lamp compartments (19), including inner walls (20) located towards the vehicle longitudinal centre line (X-X, Fig. 1) in use. At least one resilient spacer element (28) extends inwards from each inner wall (20) via a plate element (22); and provides a force substantially perpendicular to said centre line. The spacer element on each lamp assembly presses against abutment members (36) on a finisher element (10), so that the finisher element is centralized on a vehicle tailgate (1, Fig. 3), providing even gaps (14a, 14b, Fig. 3) relative to the lamp assembly lens elements (18a, 18b, Fig.3). The plate element and optionally, the spacer element, may be formed integrally with the lamp assembly housing. The finisher may be located first in transverse slots, then by nut and bolt fasteners (Fig. 6).

## Description

The present invention relates to a structure for a vehicle rear closure assembly. Such rear closures may comprise a one- or two-piece tailgate, a hatch, a boot lid, or at least one rear door; but for convenience, the rear closure assembly will henceforth be described and illustrated as a tailgate. Hence, the invention relates to a vehicle tailgate structure; to a vehicle including such a tailgate structure; and to a method of assembling a vehicle tailgate structure.

Many passenger vehicles such as cars, people carriers and sports utility vehicles (SUVs) have a hinged tailgate at the rear of the vehicle that can be opened to provide access to the passenger compartment, or to a luggage compartment.

In many cases, the tailgate carries a pair of lamp assemblies, each containing a cluster of lamps including for example the tail lamps, direction indicators, brake lamps, fog lamps, and reversing lamps. These lamp assemblies are usually mounted adjacent the side edges of the tailgate. Further lamp assemblies may be fitted to the rear wings (or fenders) of the vehicle.

A finisher element is sometimes fitted between the two lamp assemblies on the tailgate. This finisher element may consist of a moulded plastics structure that carries the tailgate release handle and lamps for illuminating the registration plate; and sometimes other components, such as an antenna for a wireless entry system, or a reversing camera. The finisher element may extend from the inner edge of one lamp assembly to the inner edge of the other lamp assembly, with only a small gap (for example 2-3mm) between the inner edge of the lamp assembly and the adjacent end of the finisher element. This gives the tailgate a uniform and neat appearance.

The finisher element typically has a width of about 1000-1500mm. When plastic mouldings of this size are formed, the manufacturing tolerance on their width can be as much as 1-2mm. This can significantly affect the sizes of the gaps between the ends of the finisher element and the lamp assemblies. If these gaps are uneven, this can give the vehicle a poorly finished appearance; which can affect its perceived quality and value. To avoid this, special jigs and fixtures are needed to ensure that the parts are correctly aligned. However, this increases the cost of assembling the vehicle.

It is an object of the present invention to provide a vehicle and components of a vehicle that mitigate at least some of the aforesaid problems.

According to the present invention, there is provided a vehicle tailgate structure comprising a hinged tailgate member and first and second lamp assemblies; each lamp assembly comprising a housing having a plurality of walls that form an open sided compartment for receiving one or more lamps, including an inner wall that is located towards the centre line of a vehicle when the lamp assembly is mounted on the vehicle, and at least one resilient spacer element that extends inwards from the inner wall and is configured to provide a force in a direction substantially perpendicular to the longitudinal centre line of the vehicle, each lamp assembly being mounted towards an outer edge of the tailgate member; the tailgate structure also comprising a finisher element mounted between the first and second lamp assemblies; **characterized in that**: said finisher element is engaged by the resilient spacer elements so that first and second ends of the finisher element are spaced substantially evenly from the respective lamp assemblies.

Each spacer element may be resiliently deformable in a direction substantially perpendicular to the longitudinal centre line of the vehicle. When two lamp assemblies are provided on opposite sides of the vehicle, for example on opposite sides of a tailgate assembly, and each lamp assembly includes a housing according to the invention, the spacer elements are configured to urge a finisher element located between the lamp assemblies into a central position in which it is located spaced evenly from the two lamp assemblies. This allows the finisher element to be located automatically in a correct central position, without the need for special jigs or time-consuming assembly techniques, even if the size of the finisher element varies significantly within manufacturing tolerances. Assembly and parts costs can therefore be reduced without compromising the appearance of the vehicle, or its perceived quality and value.

Advantageously, each resilient spacer element comprises at least one cantilever spring having a free end configured to extend towards the interior of the vehicle. This arrangement provides a simple and effective spring, which can be formed by moulding.

Each housing may include a plate element that extends inwards towards the centre line of the vehicle from the inner wall, wherein said at least one resilient spring element is mounted on an inner edge of the plate element. The plate element displaces the spring element inwards so that it can be hidden behind the finisher element, as seen from a viewpoint to the rear of the vehicle.

Advantageously, the walls and at least one of the resilient spring element and the plate element in each lamp assembly comprise a unitary plastics moulding. This allows the spring element to be formed as part of the housing at very little additional cost, and ensures that it is correctly located relative to the housing.

Each vehicle lamp assembly may include a lens element that is attached to the housing and closes the lamp compartment. The first and second ends of the finisher element may be spaced substantially evenly from the lens elements.

The finisher element may include first and second abutment elements provided on an interior surface of the finisher element, said abutment elements being engaged by the resilient spacer elements. The abutment elements may for example be located on the rear surface of the finisher element, where they cannot be seen when the finisher element is mounted on the tailgate.

A gap may be provided at each end of the finisher element between the end of the finisher element and the respective lens element, the plate element of the respective lamp assembly housing being located behind said gap. The plate element extends behind the gap, providing a neat and finished appearance.

Attachment elements may be provided for attaching the finisher element to the tailgate member, said attachment elements being configured to permit transverse movement of the finisher element relative to the tailgate member.

The tailgate structure may include fixing elements for fixing the finisher element to the tailgate member in a chosen location.

According to another aspect of the invention, there is provided a vehicle including a body structure, and also a tailgate structure according to the previous statements of invention, wherein the tailgate structure is attached to the body structure by one or more hinge elements.

According to another aspect of the invention, there is provided a method of assembling a vehicle tailgate structure according to any one of the preceding statements of invention including lens elements, wherein first and second lamp assemblies comprising lens elements are attached to a hinged tailgate member, each lamp assembly being mounted towards an outer edge of the tailgate member, and a finisher element is mounted between the first and second lamp assemblies; wherein said finisher element is engaged by resilient spacer elements, and urged thereby into a central location in which the first and second ends of the finisher element are spaced substantially evenly from the respective lens elements.

Advantageously, the method includes attaching the finisher element to the tailgate member with attachment elements that permit transverse movement of the finisher element relative to the tailgate member.

Advantageously, the method includes fixing the finisher element to the tailgate member with fixing elements to fix the finisher element in the central location.

An embodiment of the present invention will now be described by way of example with reference to the accompanying drawings, in which:
Figure 1 is a schematic rear three-quarter view from above of a vehicle;
Figure 2 is a schematic rear three-quarter view of the vehicle tailgate of Figure 1;
Figure 3 is a rear elevation of a vehicle tailgate;
Figure 4 is a sectional view from above, showing parts of a vehicle lamp assembly and of a finisher element according to the invention;
Figure 5 is a "ghosted" isometric view showing parts of a vehicle lamp assembly and of a finisher element according to the invention; and
Figure 6 is a "ghosted" rear elevation along arrow VI in Figure 4, showing parts of a vehicle lamp assembly, a finisher element, and a tailgate member according to the invention. In Figures 5 and 6, the finisher is shown as if it were translucent. In Figure 6, some parts of the lamp housing are omitted for clarity.

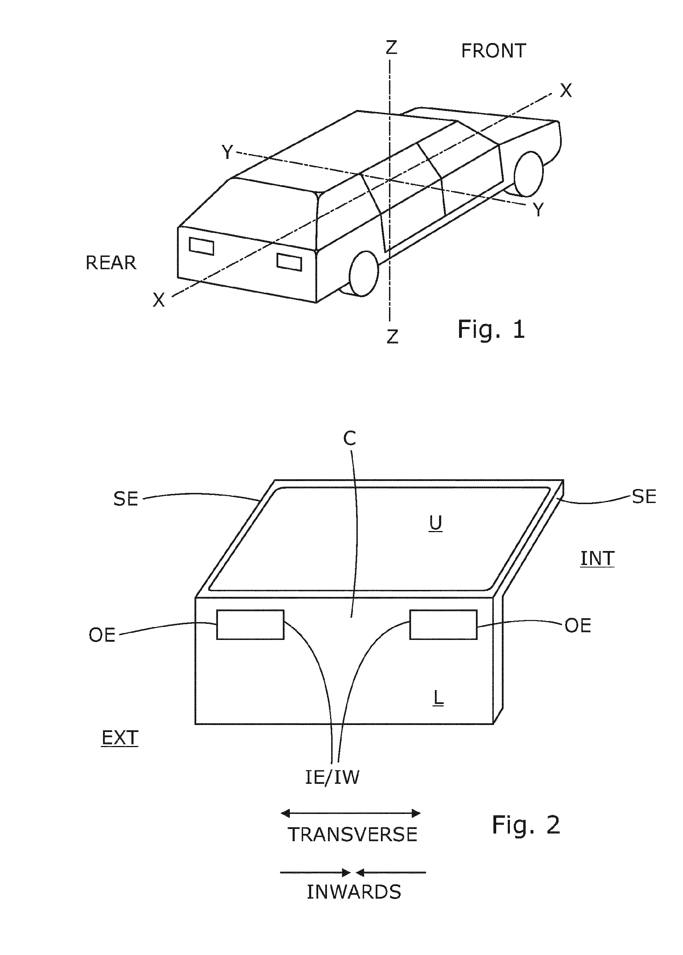

Figure 1 shows a longitudinal axis or centre line of the vehicle, X-X; a horizontal or transverse axis or centre line of the vehicle, Y-Y; and a vertical axis or centre line of the vehicle, Z-Z.

Figure 2 explains the relational terms used in the description and claims. Working clockwise from the top of the Figure, the letter C denotes the Central region of the tailgate; while U is its Upper part. SE denotes a Side Edge of the tailgate; while INT refers to the interior of the vehicle, which is conventionally forward (or in front) of the tailgate. OE refers to an Outer Edge of a lamp assembly; while IE refers to a corresponding Inner Edge of a lamp assembly or plate element. IW refers to an Inner Wall of the lamp assembly; and also corresponds to the "inwards" direction (which is also a "transverse" direction across the width of the tailgate) shown below the Figure. L represents the Lower part of the tailgate; while EXT refers to the exterior of the vehicle, which is conventionally rearward of the tailgate.

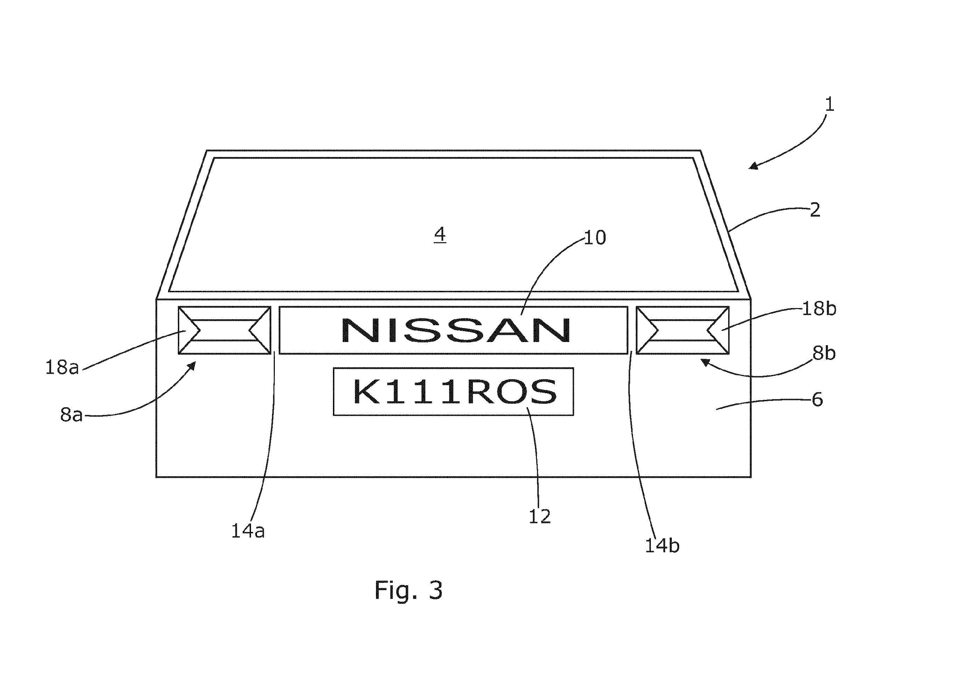

The tailgate structure 1 shown in Figure 3 includes a hinged tailgate member 2, which in an assembled vehicle is attached to the rear of the vehicle. The tailgate member 2 can be lifted to an open position to provide access to the passenger compartment, or to a luggage compartment in the rear of the vehicle.

The tailgate member 2 is usually made of metal, plastics or a combination of materials; and includes a window 4 in the upper part of the tailgate member 2. The lower part 6 of the tailgate member carries first and second lamp assemblies 8a, 8b and a finisher element 10 that extends across the width of the tailgate member 2 between the lamp assemblies 8a, 8b. A vehicle registration number (or licence) plate 12 is located below the finisher element 10. A small gap 14a, 14b is provided at each end of the finisher element 10, between the outer edges of the finisher element 10 and the inner edges of the respective lamp assemblies 8a, 8b.

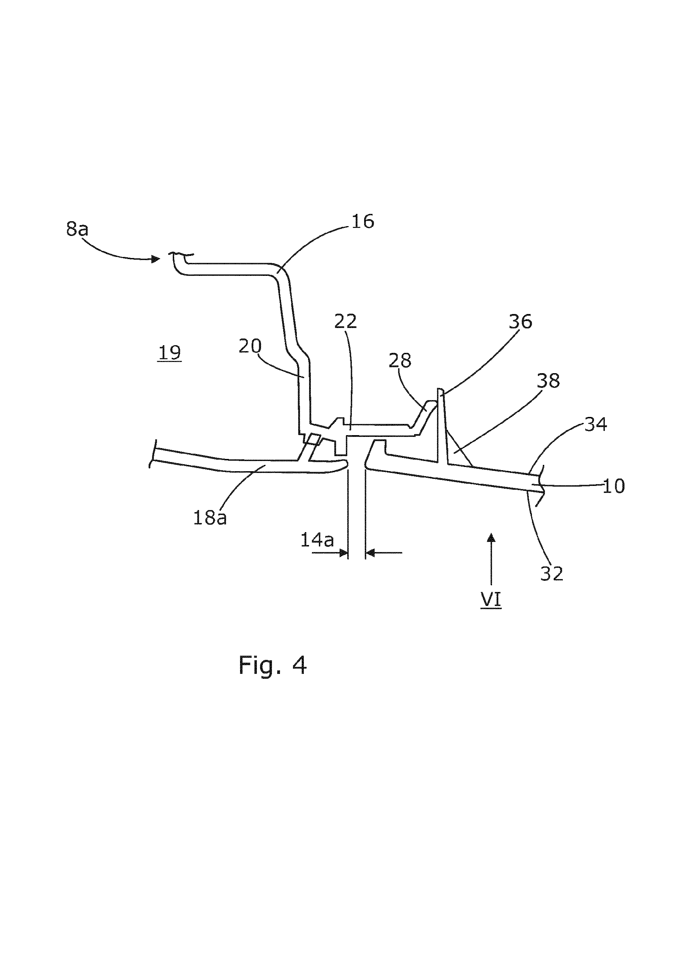

The structure of a lamp assembly 8a and the finisher element 10 is shown in Figure 4, which is a sectional view from above through the adjacent portions of these components. The lamp assembly 8a includes a lamp housing 16 and a lens element 18a that is attached to the housing 16. These may both be plastics mouldings. The housing 16 may for example be made of a strong and tough plastics material such as acrylonitrile butadiene styrene (ABS); and the lens element 18a may be made of a tough transparent plastics material, for example a polycarbonate (PC). Housing 16 and lens element 18a are welded together during assembly, hence they are shown as overlapping.

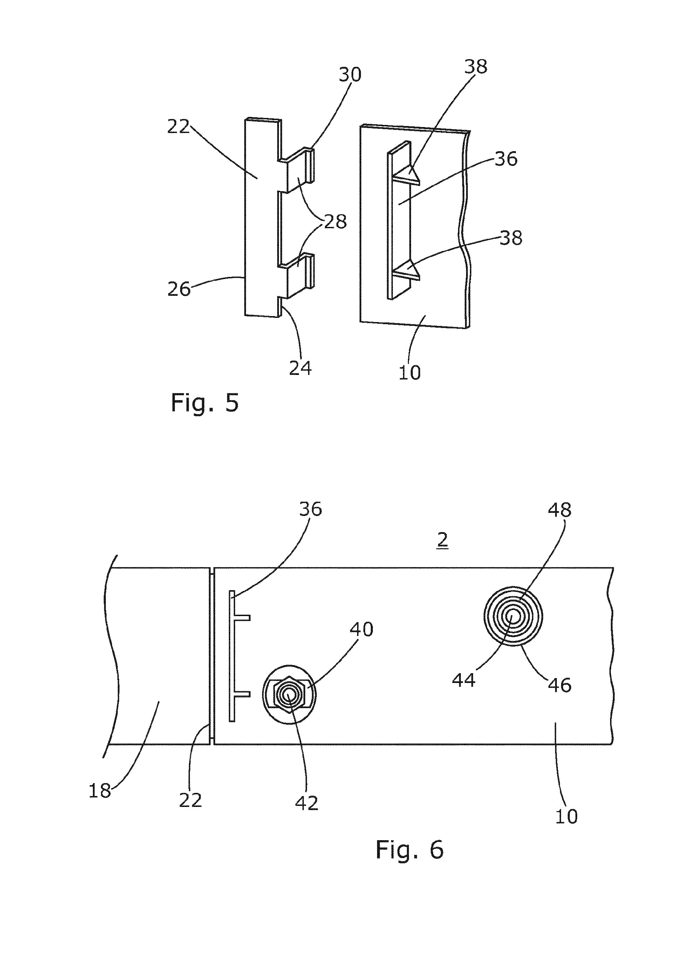

The lamp housing 16 comprises a plurality of walls that form an open sided lamp compartment 19 for receiving one or more lamps. Of these walls, only the inner wall 20 is shown in Figure 2, the inner wall 20 being the wall that is located furthest from the side of the vehicle; and closest to the longitudinal centre line of the vehicle (X-X, Figure 1). The lens element 18a is attached to the open side of the lamp compartment 19 to enclose the lamps within the compartment. The lamp housing 16 includes a plate element 22 that extends inwards from the inner wall 20 towards the longitudinal centre line of the vehicle. The plate element 22 has a free inner edge (24, Fig. 5), and an outer edge 26 that is attached to the inner wall 20 of the housing 16. Two resilient spacer elements 28 are formed on the inner edge 24 of the plate element 22. Each of the spacer elements 28 extends towards the interior of the vehicle and comprises a cantilever spring having a free end 30 that extends towards the longitudinal centre line of the vehicle. The lamp housing 16, the plate element 22 and the resilient spacer elements 28 preferably comprise a unitary plastics moulding.

The finisher element 10 has an exterior (or "A") surface 32 and an interior (or "B") surface 34. Abutment members 36 in the form of rigid vertical plates extend inwards towards the interior of the vehicle from each end of the interior surface 34, and are supported on surface 34 by support webs 38.

When the two lamp assemblies 8a, 8b and the finisher element 10 have been mounted on the tailgate member 2 as shown in Figure 3, the free ends 30 of the respective spacer elements 28 of the two lamp assemblies 8a, 8b each engage a respective one of the two abutment members 36, as depicted in Figure 4. The respective spacer elements 28 are deformed slightly by contact with the abutment members 36. As a result, they each exert a reaction force on the respective ends of the finisher element 10, in a direction towards the longitudinal centre line of the vehicle. As a result of these two opposed forces, the finisher element 10 is urged towards a central position in which the gaps 14a, 14b between the ends of the finisher element 10 and the respective lens elements 18a, 18b are of equal size.

The finisher element 10 and the tailgate member 2 include a first set of fixing elements (40, 42, Fig. 6) for attaching the finisher element 10 to the tailgate member 2 during assembly of the tailgate. This first set of fixings comprises a stud 42 that protrudes from the rear surface of the finisher element 10 and engages a slotted retaining element 40 provided on the tailgate member 2. The engagement between stud 42 and slot 40 retains the finisher element 10 on the tailgate member 2 during assembly of the tailgate, but allows the finisher element 10 to slide sideways to a centralised position under the influence of the spacer elements 28. Fixing elements of this type are provided towards both ends of the finisher element 10.

A second set of fixing elements 44, 46 is provided for permanently attaching the finisher element 10 to the tailgate member 2, and for securing it in the final centralised position. This second set of fixing elements comprises a bolt 44 that extends through a hole 48 in the tailgate, and engages a nut 46 or a threaded hole in the finisher element 10. Once the finisher element 10 has been attached to the tailgate 2 and correctly centralised, the bolts 44 can be tightened to secure the finisher element in position. The holes 48 are made slightly oversize to allow for variations in the width of the finisher element 10, within manufacturing tolerances. Two or more second sets of fixing elements 44, 46 may be provided at various locations along the length of the finisher element 10, as required.

In order to assemble the tailgate structure 1, the two lamp assemblies 8a, 8b are first attached to the tailgate member 2 towards the side edges thereof, as shown in Figure 3. The finisher element 10 is then offered up to the tailgate member 2, and pressed into the gap between the two lamp assemblies 8a, 8b. As it is pressed into position, the spacer elements 28 engage the abutment members 36 at both ends of the finisher element 10, thus automatically centralising the finisher element between the two lamp assemblies. The finisher element 10 is held in this position by the engagement of the studs 42 with the slots 40. The bolts 44 are then inserted and tightened, permanently attaching the finisher element 10 to the tailgate member 2.

When fully assembled, the spacer elements 28 are hidden from view behind the finisher element 10 because the abutment members 36 are offset from the ends of the finisher element. The plate elements 22 are positioned on the vehicle interior side of the gaps 14a, 14b; obscuring any view through the gaps, and providing a neat finished appearance.

If the finisher element 10 and/or one or both of the lamp assemblies 8a, 8b have to be removed for maintenance or repair, the spacer elements 28 will ensure that the finisher element 10 is correctly located centrally between the two lamp assemblies 8a, 8b when the parts are refitted.

## Claims

1. A vehicle tailgate structure (1) comprising a hinged tailgate member (2) and first and second lamp assemblies (8a, 8b);
each lamp assembly comprising a housing (16) having a plurality of walls that form an open sided lamp compartment (19) for receiving one or more lamps, including an inner wall (20) that is located towards the longitudinal centre line (X-X) of a vehicle when the lamp assembly is mounted on the vehicle, and at least one resilient spacer element (28) that extends inwards from the inner wall and is configured to provide a force in a direction (Y-Y) substantially perpendicular to the centre line of the vehicle, each lamp assembly (8a, 8b) being mounted towards an outer edge of the tailgate member (2);
the tailgate structure (1) also comprising a finisher element (10) mounted between the first and second lamp assemblies;
**characterized in that**:
said finisher element (10) is engaged by the resilient spacer elements (28) so that first and second ends of the finisher element are spaced substantially evenly (14a, 14b) from the respective lamp assemblies (8a, 8b).

2. A vehicle tailgate structure (1) according to claim 1, in which each resilient spacer element (28) comprises at least one cantilever spring having a free end (30) configured to extend towards the interior (INT) of the vehicle.

3. A vehicle tailgate structure (1) according to claim 1 or claim 2, including a plate element (22) that extends inwards towards the centre line (X-X) of the vehicle from each inner wall (20), wherein said at least one cantilever spring is mounted on an inner edge (24) of each plate element.

4. A vehicle tailgate structure (1) according to claim 3, in which the walls and at least one of the plate element (22) and the resilient spacer element (28) in each lamp assembly (8a, 8b) comprise a unitary plastics moulding.

5. A vehicle tailgate structure (1) according to any one of the preceding claims, wherein each vehicle lamp assembly (8a, 8b) includes a lens element (18a, 18b) that is attached to the housing (16) and closes the lamp compartment (19).

6. A vehicle tailgate structure (1) according to claim 5, wherein the first and second ends of the finisher element (10) are spaced substantially evenly from the respective lens elements (18a, 18b).

7. A vehicle tailgate structure (1) according to any preceding claim, wherein the finisher element (10) includes first and second abutment elements (36) provided on an interior surface of the finisher element, said abutment elements being engaged by the resilient spacer elements (28).

8. A vehicle tailgate structure (1) according to any one of claims 5 to 7 when dependent on at least claim 3, wherein a gap (14a, 14b) is provided at each end of the finisher element (10) between the end of the finisher element and the respective lens element (18a, 18b), said plate element (22) being located on the vehicle interior side of said gap.

9. A vehicle tailgate structure (1) according to any preceding claim, including attachment elements (40, 42) for attaching the finisher element (10) to the tailgate member (2), said attachment elements being configured to permit transverse movement of the finisher element (10) relative to the tailgate member (2).

10. A vehicle tailgate structure (1) according to claim 9, including fixing elements (44, 46) for fixing the finisher element (10) to the tailgate member (2) in a chosen location.

11. A vehicle including a body structure and a tailgate structure (1) according to any preceding claim, wherein the tailgate structure (1) is attached to the body structure by one or more hinge elements.

12. A method of assembling a vehicle tailgate structure (1) according to any one of claims 5 to 10, wherein first and second lamp assemblies (8a, 8b) comprising lens elements (18a, 18b) are attached to a hinged tailgate member (2), each lamp assembly being mounted towards an outer edge of the tailgate member (2), and a finisher element (10) is mounted between the first and second lamp assemblies, wherein said finisher element is engaged by the resilient spacer elements (28) and urged thereby into a central location in which the first and second ends of the finisher element (10) are spaced substantially evenly (14a, 14b) from the respective lens elements (18a, 18b).

13. A method according to claim 12, including attaching the finisher element (10) to the tailgate member (2) with attachment elements (40, 42) that permit transverse movement of the finisher element relative to the tailgate member.

14. A method according to claim 12 or claim 13, including fixing the finisher element (10) to the tailgate member (2) with fixing elements (44, 46) to fix it in the central location.
